# EUROPEAN PATENT SPECIFICATION

(11) **EP 2 119 636 B1**
(45) Date of publication and mention of the grant of the patent: **31.08.2011**
(21) Application number: 09169586.6
(22) Date of filing: 23.07.2003
(51) Int. Cl.: B65D 19/00, B29C 51/16, B29C 63/02

(54) **Pallet and method for manufacturing the same**
Palette und Herstellungsverfahren derselben
Palette et son procédé de fabrication

(43) Date of publication of application: 18.11.2009
(62) Divisional of application: 07008185.6
(73) Proprietor: Airdex International, Inc., Henderson, NV 89074 (US)
(72) Inventor: Dummett, Lawrence W., Gosford, New South Wales 2250 (AU)
(74) Representative: Schiweck, Wolfram

(56) References cited:
- EP-A- 0 480 451
- WO-A-95/23682
- CH-A- 404 185
- DE-A1- 2 045 712
- GB-A- 1 308 036

## Description

### BACKGROUND OF THE INVENTION

Field of Invention: This invention is in the general field of load-bearing structure and, more particularly, is a load bearing structure made from an expanded polystyrene core that is chemically combined with high impact polystyrene.

Description of the Prior Art: A shipping pallet is a well known load-bearing moveable platform whereon articles are placed for shipment. The pallet usually is loaded with a multiplicity of items, such as cartons or boxes. The loaded pallet is movable with either a pallet truck or a furk lift.

There is a nine billion dollar market for pallets in the United States. There is a thirty billion dollar world wide market. Approximately ninety percent of these markets is for for pallets made from wood.

The weight of the wood pallet is in a range of 18 to 32 kg (forty to seventy pounds). Therefore, the weight of a cargo shipped on the wood pallet is reduced by from 18 to 32 kg (forty to seventy pounds) to provide for the weight of the wood pallet.

It should be understood that injuries caused by wood splinters and nails are frequent occurrences among people who handle the wood pallet. Additionally, disposal of the wood pallet at the end of its useful life is a threat to the environment.

There has been concern among nations about the use of the wood pallet causing an import of wood-boring insects, including the Asian Longhorned Beetle, the Asian Cerambycid Beetle, the Pine Wood Nematode, the Pine Wilt Nematode and the Anoplophora Glapripwnnis. Exemplary of damage caused by imported insects is the fate of the Chestnut Tree in the United States. There was a time when it was said that a squirrel could cross the United States on Chestnut Tree limbs without ever touching the ground. Insect infestation has caused the extinction of the Chestnut Tree in the United States.

Therefore, the wood pallet's weight, the injuries that it causes, its threat to the environment and the possibility its causing an importation of wood-boring insects militates against the use of the wood pallet. As explained hereinafter, there is an attractive alternative to the wood pallet.

EP 480 451 discloses a structure according to the preamble of claim 1.

### SUMMARY OF THE INVENTION

An object of the invention is an easily movable load bearing structure that is not likely to carry wood-boring insects.

Another object of the invention is a movable load bearing structure that does not have splinters and nails that may cause injury. The present invention provides a load bearing structure as defined in claim 1 and a method as defined in claim 11.

According to the present invention, a dunnage platform has an expanded polystyrene core with a region proximal to its surface that is chemically combined with a high impact polystyrene,

Because of a chemical combination of components, comparing the core before the chemical combination to the dunnage platform that is formed, there is an increase in strength to weight ratio of as much as 1000:1 that allows the dunnage platform to carry loads comparable to loads carried by a wooden pallet. The dunnage platform does not support insect life and does not have splinters and nails that cause injury.

Other objects, features and advantages of the invention should be apparent from the following description of a preferred embodiment thereof as illustrated in the accompanying drawing.

### BRIEF DESCRIPTION OF THE DRAWING

Fig. 1 is a perspective view of a top side of a core of a dunnage platform that is in accordance with the invention;
Fig. 2 is a perspective view of a bottom side of the core of fig. 1;
Fig. 3 is a perspective view of a forming mold;
Fig. 4 is a side elevation of the core of fig. 1 within the forming mold of fig. 3 positioned below a clamping frame with a first high impact polystyrene sheet clamped therein in preparation for a first of two parts of a chemical combination process;
Fig. 5 is a perspective view of the clamping frame and the first sheet of fig. 4;
Fig 5A is a plan view of the first sheet of fig 3;
Fig. 5B is a view of fig. 5 taken along the line 5B-5B;
Fig. 6 is a side elevation of the core of within the forming mold of fig. 3 positioned below the clamping frame after the first sheet has been heated;
Fig. 7 is a side elevation of the clamping frame seated upon a marginal portion of the bottom side of the core;
Fig. 8 is a perspective view of the bottom side wherein holes have been drilled through strengthened polystyrene;
Fig. 9 is a side elevation of the core within the forming mold positioned below the clamping frame with a second high impact polystyrene sheet clamped therein in preparation for the second part of the chemical combination process;
Fig. 10 is a side elevation of the core within the forming mold positioned below the clamping frame after the second sheet has been heated; and
Fig. 11 is a side elevation of the clamping frame of fig. 10 seated upon a marginal portion of the top side of the core.

### DESCRIPTION OF THE PREFERRED EMBODIMENT

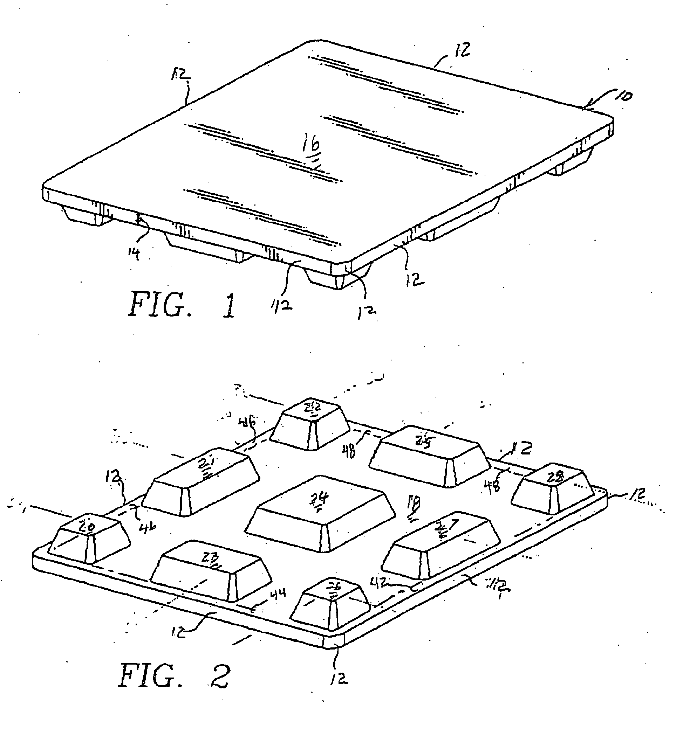

As shown in figs. 1 and 2, an expanded polystyrene core 10 is in the general shape of a rectangular slab with an edge 12 (fig. 1) that has a width 14 which is approximately 4.5 cm (1 3/4 inches). The core 10 has a smooth topside 16 that is on the order of 122 cm (forty eight inches) long and 102 cm (forty inches) wide. A bottom side 18 (fig. 2) of the core 10 includes legs 20-28 approximately four inches long extending therefrom.

The edge 12 is proximal to marginal spaces 42, 44, 46, 48 on the bottom side 18. The marginal spaces 42, 44, 46, 48 separate the legs 26-28, the legs 20, 23 26, the legs 20-22 and the legs 22, 25, 28, respectively, from the edge 12.

Because the core 10 is made from expanded polystyrene, it does not have sufficient stuctural strength to be useable as a load bearing platform. A dunnage platform with sufficient strength is formed by chemically combining a region of the core 10, proximal to its surface, with a high impact polystyrene. Expanded polystyrene and high impact polystyrene are well known. The dunnage platform described hereinafter has substantially the same dimensions as the core 10.

A first of two parts of a chemical combination process causes portions of the expanded polystyrene proximal to the bottom side 18 to be chemically combined with the high impact polystyrene to form strengthened polystyrene. Additionally, a portion of the expanded polystyrene that is proximal to the edge 12 and in a proximal relationship to the bottom side 18 is chemically combined with the high impact polystyrene to form the strengthened polystyrene.

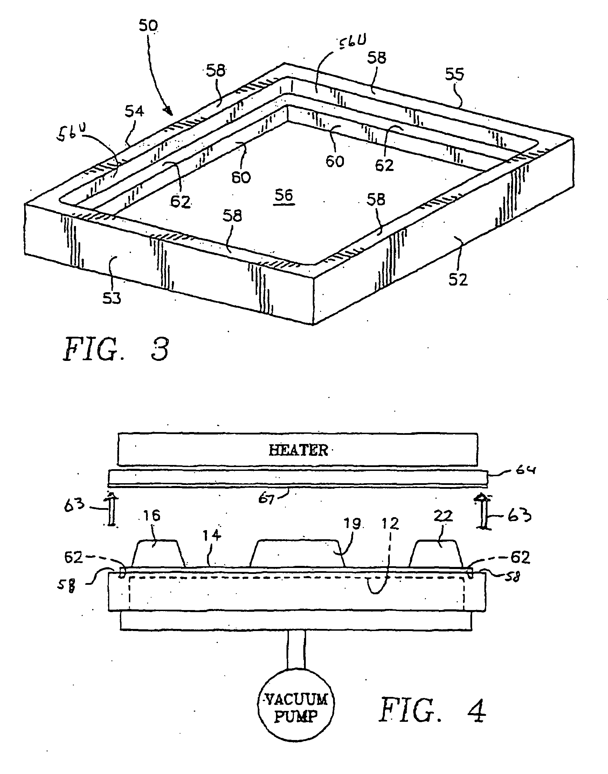

As shown in fig. 3, a forming mold 50 has rectangularly disposed walls 52-55 that define an interior 56 and a top surface 58. An interior surface 56U of the walls 52-55 outline a portion of the interior 56 that is complimentary to a shape of the core 10 outlined by the edge 12.

An interior of the walls 52-55 form a shelf 60 that extends around the interior 56. The shelf 60 has a surface 62 that is parallel to the surface 58. For reason's explained hereinafter, a displacement between the surfaces 58, 62 is less than one half of the width 14 (fig. 1). In this embodiment, the displacement between the surfaces 58, 62 is one third of the width 14.

As shown in fig. 4, the mold 50 is moveable in a direction of the arrows 63. The core 10 is retained within the mold 50 with a marginal portion of the top side 16 that is proximal to the edge 12 is seated upon the surface 62 (fig. 3) whereby the top side 16 is maintained within the mold 50. Since the distance between the surfaces 58, 62 is one third of the width 14, two thirds of the edge 12 extends from the mold 50. Additionally, the bottom side 18 extends from the mold 50.

A fixedly positioned clamping frame 64 has a first high impact polystyrene sheet 67 clamped therein. A heater 68 is positioned proximal to the frame 64.

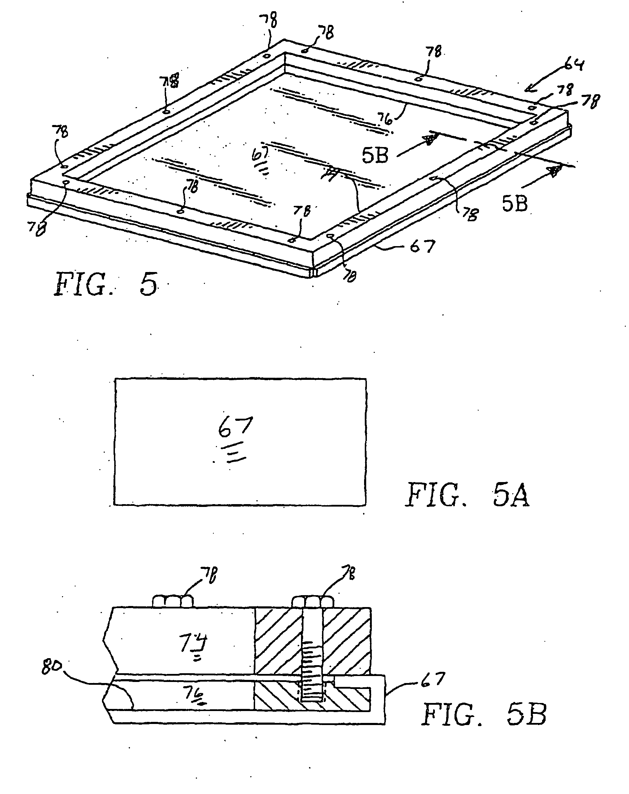

As shown in fig. 5, the frame 64 is made from an upper rectangular frame 74 and a lower rectangular name 76 that are held together by a plurality of screws 78. The length and width of the upper frame 74 is substantially equal to the length and width, respectively, of the lower frame 76.

As shown in figs. 5A, and 5B, with the screws 78 not tightened, edges of the sheet 67 (fig. 5A) are inserted between the frames 74, 76 (fig. 5B) in much the same way that edges of a bed sheet are inserted between a mattress and a box spring. At corners of the frames 74, 76 the sheet 67 is folded in much the same way that edges of the bed sheet are folded to form what is known as a hospital corner and inserted between the frames 74, 76. When the edges, and corners of the sheet 67 are inserted, the sheet 67 extends in a plane that causes it to cover a side 80 of the frame 76. Thereafter, the screws 78 are tightened whereby the sheer 67 is fixedly maintained in the frame 64.

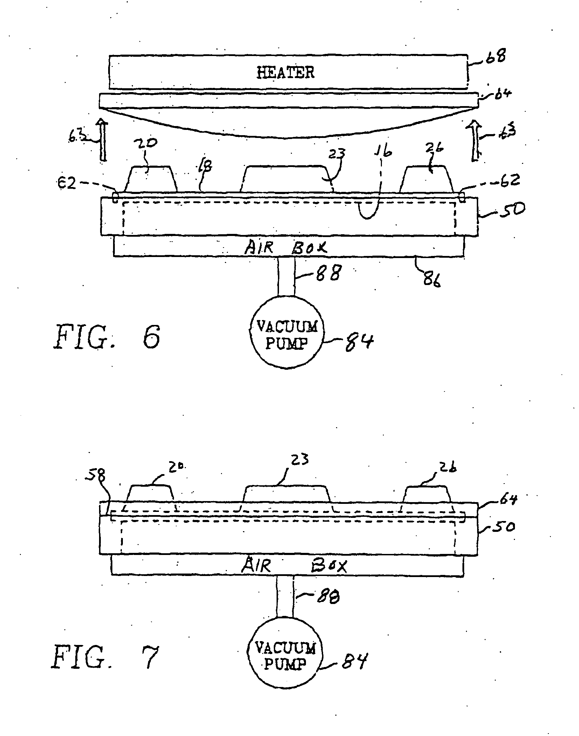

As shown in fig. 6, in the first part of the process, the heater 68 heats the sheet 67 to a temperature in a range of 145°C to 191°C (293°F to 375°F). In response to being heated, the sheet 67 characteristically sags. After the sheet 67 is heated, the heater 68 is removed and the mold 50 is moved in a direction of the arrows 63.

It should be understood that when the sheet 67 is heated, it becomes fragile. Because the frame 64 is fixedly positioned, a risk of damage to the sheet 67 is minimized.

As shown in fig. 7, the mold 50 is moved until a portion of the heated sheet 67 that covers the side 80 (fig. 5B) is seated upon the surface 58 (fig. 3). The mold 50 is connected to a vacuum pump 84 through an air box 86 and a connector line 88.

It should be understood that the core 10 is porous. When the vacuum pump 84 operates, air may pass through the core 10, from the top side 16, to the pump 84. The headed sheet 67 is not porous, thereby causing one atmosphere of air pressure that draws the heated sheet 67 onto the bottom side 18 and the two thirds of the edge 12 that extends from the mold 50.

The expanded polystyrene proximal to the bottom side 18 and proximal to the two thirds of the edge 12 that extend above the mold 50 chemically combine with the high impact polystyrene of the sheet 67 to form the strengthened polystyrene. The strengthened polystyrene is not porous. The side 18 and the legs 20-28 with the strengthened polystyrene proximal to their surface are hereinafter referred to as a side 18C with legs 20C-28C, respectively.

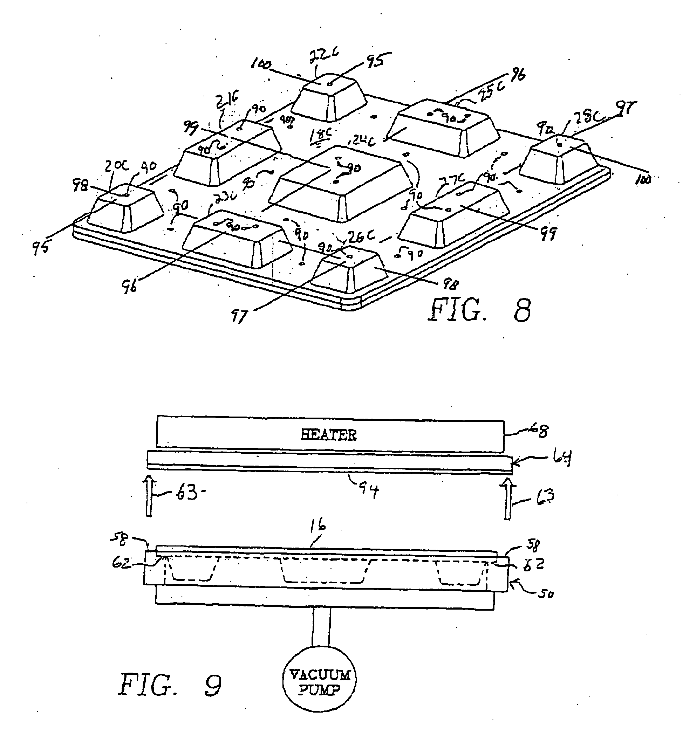

As shown in fig. 8, because the strengthened polystyrene is not porous, a plurality of holes 90 are drilled into the side 18C to approximate the porosity of expanded polystyrene. As shown in fig. 9, in a second part of the process, the side 18C is retained within the mold 50 with the marginal spaces 42, 44, 46, 48 (fig. 2) seated upon the surface 62. Since the displacement between the surfaces 58, 62 is one third of the width 114, two thirds of the edge 12 extends from the mold 50. It should be understood that during the second part of the process, the two thirds of the edge 12 that extends from the mold 50 includes one third of the edge 12 that did not extend from the mold 50 during the first part of the process.

The frame 64 frames a second high impact polystyrene sheet 94, similar to the sheet 67. The frame 64 with the sheet 94 is fixedly positioned above the mold 50. The heater 68 is positioned proximal to the frame 64.

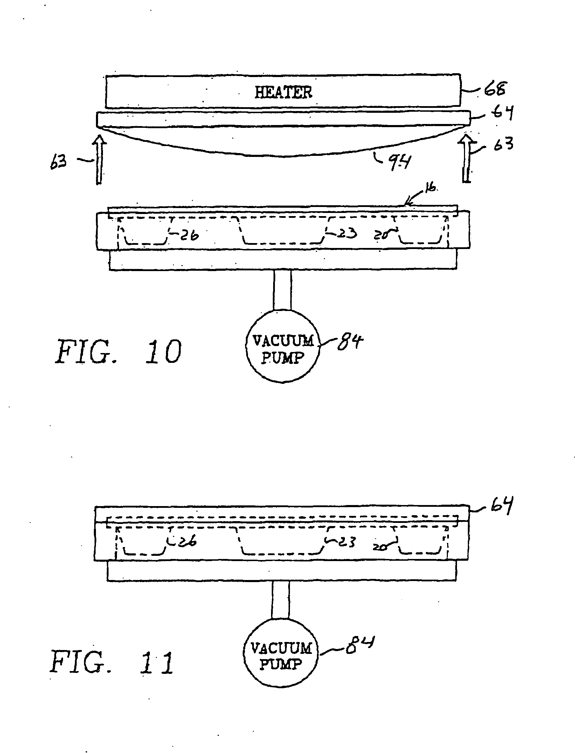

As shown in fig. 10, the heater 68 is used to heat the sheet 94 and the frame 64 mold 50 is moved in a direction of the arrows 63 in a manner similar to that described in connection with the first part of the process.

As shown in fig. 11, the mold 50 is moved until a portion of the sheet 94 that covers the surface 80 (fig. 5B) is seated upon the surface 58. Because of the holes 90 (fig. 8), when the vacuum pump 84 operates, air may pass to the pump 84. However, the sheet 94 is not porous, thereby causing one atmosphere of air pressure to draw the sheet 94 onto the top side 16. Since the sheet 94 is connected to the frame 64 as described hereinbefore, all portion of the core 10 that extend above the mold 50 contact the sheet 94.

In accordance with the second part of the process, the expanded polystyrene proximal to the portions of the surface of core 10 that extends from the mold 50 chemically combines with the high impact polystyrene of the sheet 94 to form the strengthened polystyrene. Moreover, because the displacement between the surface 58, 62 is less than one half of the width 14, the strengthened polystyrene is formed proximal to the entire edge 12.

The dunnage platform formed by the process weighs approximately 3.5 kg (eight pounds) and can carry an approximately 1600kg (3500 pound) load.

As shown in fig.8 the legs 20C-22C, the legs 23C-25C and the legs 26C-28C are arranged in parallel columns 95-97, respectively. The columns 95-97 are spaced so that times of a fork lift can fit between the columns 95, 96 and between the columns 96, 97. Accordingly, with the tines parallel to the columns 95-97, the fork lift can lift the dunnage platform from either of two sides.

Similarly, the legs 20C, 23C, 26C, and the legs 21C, 24C, 27C and the legs 22C, 25C, 28C are arranged in parallel rows 98-100, respectively, that are orthogonal to the columns 95-97. The rows 98-100 are spaced so that tines of a fork lift can fit between the rows 98, 99 and between the rows 99, 100. Accordingly, with the tines parallel to the columns 98-100, the fork lift can lift the dunnage platform from either of two sides.

Preferred embodiments of the present invention include:-

A dunnage platform in the general shape of a rectangular slab with a plurality of legs extending from one side, said dunnage platform being made from expanded polystyrene that has a portion proximal to its surface chemically combined with high impact polystyrene.

The dunnage platform described above wherein said legs are arranged in rows and columns that are orthogonal.

A process for making a strengthened polystyrene, comprising the steps of:
heating high impact polystyrene to a temperature in a range of 145°C to 191°C (293 °F to 375 °F), and
placing said heated high impact polystyrene onto expanded polystyrene.

In the method of making a dunnage platform, comprising the steps of:
providing a core made from expanded polystyrene in the general shape of a rectangular slab with one side having a plurality of legs extending therefrom;
providing high impact polystyrene; and
chemically combining a portion of said core proximal to its surface with said high impact polystyrene.

The above method wherein said step of providing high impact polystyrene includes the steps of providing first and second high impact polystyrene sheets, said step of chemically combining including the steps of:
providing a forming mold with an interior that is complimentary to a shape outlined by an edge of said core;
retaining said core within said mold with a first side of said core and at least half the thickness of said core extending therefrom;
heating said first sheet to a temperature in a range of 145°C to 191°C (293 °F to 375 °F),
moving said heated first sheet onto portions of said core that extend from said mold, thereby forming strengthened polystyrene proximal to the surface of said first side and proximal to a surface of at least half of the edge of said core;
retaining said core within said mold with a second side of said core and at least half the thickness of said core extending therefrom;
heating said second sheet to a temperature in a range of 145°C to 191°C (293 °F to 375 °F); and
moving said heated second sheet onto portions of said core that extend from said mold.

The above method wherein said step of moving said heated first sheet includes the additional steps of:
providing a vacuum pump; and
connecting said vacuum pump to pump air from said second side of said core.

The above method with the additional step of drilling one or more holes through said strengthened polystyrene prior to healing said second sheet.

The above method wherein said step of moving said heated second sheet includes the additional steps of
providing a vacuum pump; and
connecting said vacuum pump to pump air from said drilled holes.

## Claims

1. A load bearing structure comprising a core (10) with a first side (16) and a second side (18), and with an edge (12) separating the first side (16) and the second side (18), said core (10) being made from expanded polystyrene **characterized in that** the core (10) has a portion proximal to its surface combined with heat with first and second high impact polystyrene sheets (67, 94) to form strengthened polystyrene, wherein the first sheet (67) covers the first side and the second sheet (94) covers the second side.

2. The load bearing structure of claim 1 wherein said first sheet (67) covers in part said edge (12) and said second sheet (94) covers in part said edge (12) with the second sheet (94) contacting said first sheet (67) at said edge (12).

3. A load bearing structure as claimed in Claims 1-2 wherein the sheet(s) are formed proximal to the edge (12) of the expanded polystyrene core (10).

4. A load bearing structure as claimed in 1-2 wherein the sheets are formed proximal to the entire edge (12) of the expanded polystyrene core (10).

5. A load bearing structure according to Claims 1-2 wherein said first sheet (67) extends over at least half of the edge (12) and wherein said second sheet (94) extends over less than half of the edge (12).

6. A load bearing structure according to Claim 1 wherein the first sheet is combined with two thirds of the edge of the expanded polystyrene core.

7. A load bearing structure according to Claim 6 wherein the second sheet is combined with one third of the thickness of the expanded polystyrene core.

8. A load bearing structure according to Claim 1 wherein said first and said second sheets are combined with the expanded polystyrene core at reduced pressure.

9. A load bearing structure according to Claim 1 wherein the sheet combines with the expanded polystyrene core with the sheet heated to a temperature in the range of 145°C to 191 °C.

10. A load bearing structure according to any preceding claim wherein said structure comprises a dunnage platform.

11. A process for making a load bearing structure, said process comprises the steps of:
(i) using an expanded polystyrene core (10) having a first side (16) and a second side (18) and with an edge (12) separating the first side (16) and the second side (18);
(ii) retaining said expanded polystyrene core (10) in a mold with the first side (16) of the core (10) extending from the mold;
(iii) combining with heat a first high impact polystyrene sheet (67) to the first side of the core (10) to form strengthened polystyrene;
(iv) retaining said expanded polystyrene core (10) in a mold with the second side of the core (10) extending from the mold;
(v) combining with heat a second high impact polystyrene sheet (94) to the second side (18) of the core (10) such that the sheet is formed proximal to the edge (12) of the expanded polystyrene core (10) and to form strengthened polystyrene.

12. The process of claim 11 wherein:
said step (iii) of combining includes combining the first sheet with at least part of the edge; and
said step (v) of combining includes combining the second sheet with at least part of the edge.

13. The process of claim 11 or 12 wherein:
said step (iii) of combining includes combining the first sheet with at least part of the edge; and
said step (v) of combining includes combining the second sheet with at least part of the edge and wherein the second sheet contacts the first sheet at the edge.

## Patentansprüche

1. Tragende Struktur, die einen Kern (10) mit einer ersten Seite (16) und einer zweiten Seite (18) aufweist sowie mit einer die erste Seite (16) und die zweite Seite (18) trennenden Kante (12), wobei der Kern (10) aus einem geschäumten Polystyrol hergestellt ist, **dadurch gekennzeichnet, dass** der Kern (10) nahe seiner Oberfläche einen Bereich hat, der mit ersten und zweiten Folien (67, 94), die schlagfestes Polystyrol umfassen, verbunden ist, wobei die erste Folie (67) die erste Seite (16) und die zweite Folie (94) die zweite Seite (18) abdeckt.

2. Tragende Struktur nach Anspruch 1, wobei die besagte erste Folie (67) zum Teil die besagte Kante (12) bedeckt und die besagte zweite Folie (94) zum Teil die besagte Kante (12) bedeckt, wobei die zweite Folie (94) die erste Folie (67) an der Kante (12) berührt.

3. Tragende Struktur gemäß Anspruch 1 oder 2, wobei die Folie(n) nahe an der Kante (12) des geschäumten Polystyrol-Kerns (10) ausgebildet ist/sind

4. Tragende Struktur gemäß Anspruch 1 oder 2, wobei die Folien nahe der gesamten Kante (12) des geschäumten Polystyrol-Kerns (10) ausgebildet sind.

5. Tragende Struktur gemäß Anspruch 1 oder 2, wobei sich die besagte erste Folie iiber wenigstens die Hälfte der erste Kante (12) erstreckt und wobei sich die besagte zweite Folie über weniger als die Hälfte der Kante (12) erstreckt.

6. Tragende Struktur nach Anspruch 1, wobei die erste Folie mit zwei Dritteln der Kante des geschäumten Polystyrol-Kerns verbunden ist.

7. Tragende Struktur nach Anspruch 6, wobei die zweite Folie mit einem Drittel der Dicke des geschäumten Polystyrol-Kerns verbunden ist.

8. Tragende Struktur gemäß Anspruch 1, wobei die besagte erste und die besagte zweite Folie mit dem geschäumten Polystyrol-Kern bei reduziertem Druck verbunden worden sind.

9. Tragende Struktur gemäß Anspruch 1, wobei sich die Folie mit dem geschäumten Polystyrol-Kern mit der auf eine Temperatur im Bereich von 145 °C bis 191 °C erwärmten Folie verbindet.

10. Tragende Struktur gemäß irgendeinem der vorhergehenden Ansprüche, wobei die Struktur eine Packfläche aufweist.

11. Verfahren zur Herstellung einer tragenden Struktur, wobei das Verfahren die folgenden Schritte umfasst:
(i) Verwenden eines geschäumten Polystyrol-Kerns (10) mit einer ersten Seite (16) und einer zweiten Seite (18) und mit einer die erste Seite (16) und die zweite Seite (18) trennenden Kante (12),
(ii) den geschäumten Polystyrol-Kern (10) in einer Form halten, wobei die erste Seite (16) des Kerns (10) aus der Form heraussteht,
(iii) durch Hitze eine erste, schlagfestes Polystyrol umfassende Folie (67) mit der ersten Seite des Kerns (10) verbinden, um verstärktes Polystyrol zu bilden,
(iv) den geschäumten Polystyrol-Kern (10) in einer Form halten, wobei die zweite Seite des Kerns (10) aus der Form heraussteht,
(v) durch Hitze eine zweite, schlagfestes Polystyrol umfassende Folie (94) mit der zweiten Seite (18) des Kerns (10) derart verbinden, dass die Folie nahe an der Kante (12) des geschäumten Polystyrol-Kerns (10) ausgebildet wird, und um verstärktes Polystyrol zu bilden.

12. Verfahren nach Anspruch 11, wobei:
der besagte Schritt (iii) des Verbindens aufweist: die erste Folie mit zumindest einem Teil der Kante verbinden und
der besagte Schritt (v) des Verbindens aufweist: die zweite Folie mit zumindest einem Teil der Kante verbinden.

13. Verfahren nach Anspruch 11 oder 12, wobei:
der besagte Schritt (iii) des Verbindens aufweist: die erste Folie mit zumindest einem Teil der Kante verbinden und
der besagte Schritt (v) des Verbindens aufweist: die zweite Folie mit zumindest einem Teil der Kante verbinden und wobei die zweite Folie die erste Folie an der Kante berührt.

## Revendications

1. Structure de support de charge comprenant un noyau (10) avec un premier côté (16) et un deuxième côté (18), et avec une bordure (12) séparant le premier côté (16) et le deuxième côté (18), ledit noyau (10) étant fait de polystyrène expansé **caractérisée en ce que** le noyau (10) possède une partie proximale à sa surface combinée par chaleur avec des première et deuxième feuilles de polystyrène choc (67, 94), la première feuille (67) recouvrant le premier côté et la deuxième feuille (94) recouvrant le deuxième côté.

2. Structure de support de charge selon la revendication 1, dans laquelle ladite première feuille (67) recouvrant une partie de ladite bordure (12) et où ladite deuxième feuille (94) recouvrant une partie de ladite bordure (12), dans laquelle la deuxième feuille (94) touche ladite première feuille (67) à ladite bordure (12).

3. Structure de support de charge selon les revendications 1-2, dans laquelle les feuilles sont formées de manière proximale à la bordure (12) du noyau de polystyrène expansé (10).

4. Structure de support de charge selon les revendications 1-2, dans laquelle les feuilles sont formées de manière proximale a l'entière bordure (12) du noyau de polystyrène expansé (10).

5. Structure de support de charge selon les revendications 1-2, dans laquelle ladite première feuille s'étend sur au moins la moitié de la bordure (12) et ou ladite deuxième feuille de polymère choc s'étend sur moins de la moitié de la bordure (12).

6. Structure de support de charge selon la revendication 1, dans laquelle la première feuille est combinée avec deux tiers de l'épaisseur du noyau de polystyrène expansé.

7. Structure de support de charge selon la revendication 6, dans laquelle la deuxième feuille est combinée avec un tiers de l'épaisseur du noyau de polystyrène expansé.

8. Structure de support de charge selon la revendication 1, dans laquelle ladite première feuille et ladite deuxième feuille sont combinées chimiquement avec le noyau de polystyrène expansé à une pression réduite.

9. Structure de support de charge selon la revendication 1, dans laquelle la feuille combine le noyau de polystyrène expansé avec la feuille chauffée à une température dans le domaine de 145°C à 191°C.

10. Structure de support de charge selon l'une quelconque des revendications précédentes, dans laquelle ladite structure comprend une plate-forme d'arrimage.

11. Procédé de fabrication d'une structure de support de charge, ledit procédé comprenant les étapes consistent à:
(i) utiliser un noyau de polystyrène expansé (10) ayant un premier cote (16) et un deuxième cote (18) et avec une bordure séparant le premier cote (16) et le deuxième cote (18);
(ii) maintenir ledit noyau de polystyrène expansé dans un moule, le premier cote (16) du noyau (10) s'étendant à partir du moule ;
(iii) combiner par chaleur une première feuille du polystyrène choc (67) au premier cote du noyau (10) pour former un polystyrène renforcé;
(iv) maintenir ledit noyau de polystyrène expansé (10) dans un moule, le deuxième cote du noyau (18) s'étendant à partir du moule ;
(v) combiner par chaleur une deuxième feuille (94) du polystyrène choc au deuxième côté (18) du noyau (10) de sorte que la feuille soit formée de manière proximale a la bordure (12) du noyau de polystyrène expansé (10) et pour former un polystyrène renforcé.

12. Procédé selon la revendication 11, dans laquelle ladite étape (iii) de combiner comprend combiner la première feuille à au moins une partie de la bordure, et ladite étape (v) de combiner comprend combiner la deuxième feuille à au moins une partie de la bordure.

13. Procédé selon la revendication 11 ou la revendication 12, dans laquelle ladite étape (iii) de combiner comprend combiner la première feuille à au moins une partie de la bordure et ladite étape (v) de combiner comprend combiner la deuxième feuille à au moins une partie de la bordure et dans laquelle la deuxième feuille touche ladite première feuille à ladite bordure.
